# EUROPÄISCHE PATENTSCHRIFT

(11) **EP 2 686 557 B1**
(45) Veröffentlichungstag und Bekanntmachung des Hinweises auf die Patenterteilung: **19.08.2015**
(21) Anmeldenummer: 12720082.2
(22) Anmeldetag: 13.03.2012
(51) Int. Cl.: F16D 3/84

(54) **GELENK ZUR ÜBERTRAGUNG VON DREHMOMENTEN UND AXIALKRÄFTEN**
COUPLING TO TRANSMIT TORQUE AND AXIAL FORCES
ACCOUPLEMENT POUR TRANSMISSION DE COUPLE ET DE FORCES AXIALES

(30) Priorität: 17.03.2011 DE 102011014284
(43) Veröffentlichungstag der Anmeldung: 22.01.2014
(73) Patentinhaber: NETZSCH Pumpen & Systeme GmbH, 95100 Selb (DE)
(72) Erfinder: KAMAL, Hisham, 84478 Waldkraiburg (DE); WEIGL, Stefan, 84453 Mühldorf am Inn (DE); BINDIG, Christian, 95632 Wunsiedel (DE)
(86) Internationale Anmeldenummer: PCT/DE2012/000270
(87) Internationale Veröffentlichungsnummer: WO 2012/122972

(56) Entgegenhaltungen:
- DE-A1- 2 311 985
- DE-A1-102004 043 183
- US-A- 3 567 348
- US-A1- 2006 237 637

## Beschreibung

Die vorliegende Erfindung betrifft ein Gelenk, mit welchem Axialkräfte und Drehmomente in Verbindung mit exzentrischen Rotationsbewegungen von Pumpen übertragen bzw. aufgenommen werden können.

Die schweizer Patentschrift CH 446 913 betrifft eine Schutzvorrichtung für die aus Gelenkkupplungen und Gelenkwelle bestehende Antriebsverbindung im Ansauggehäuse einer Exzenterschneckenpumpe. Die Antriebsverbindung ist mit einem Schutzrohr versehen, wobei das Schutzrohr gegen ein Mitdrehen an dem Sauggehäuse abgestützt ist. Zusätzlich zu der Gelenkwelle werden noch weitere Teile der Antriebsverbindung durch das Schutzrohr abgedeckt.

Die deutsche Patentanmeldung DE 198 43 333 A1 offenbart eine winkelbewegliche Kraftübertragungsvorrichtung bestehend aus einem Gehäuse und einem darin schwenkbaren Kugelkopf, der durch einen ihn durchdringenden Bolzen drehfest mit dem Gehäuse verbunden ist. Die Bohrung des Kugelkopfes ist so erweitert, dass auf dem Bolzen ein bombierter Mitnehmer gleitend angeordnet werden kann, der bei Taumel, Exzenter- oder Winkelbewegungen zwischen angetriebenem Element und Antriebseinheit den Schwenkbewegungen des Kugelkopfes folgt und stets mit Teilflächen an der Innenfläche der Bohrung anliegt. Die Abstützung des Kugelkopfes bei Axialschüben erfolgt durch eine im Gehäuse schwimmend angeordnete Kalotte. In weiteren Ausführungen sind die seitliche Führung des Mitnehmers in der Bohrung, eine vereinfachte Form des Mitnehmers, die Abdichtung des Innenraums der Vorrichtung und die rückwärtige Abstützung des Kugelkopfes bei Axialzug beschrieben.

Die deutsche Patentschrift DE 103 35 966 B3 offenbart eine Exzenterschneckenpumpe mit einem Antrieb, der über eine Zwischenwelle mit einer Rotor/Statorkombination in Verbindung steht. Die Zwischenwelle ist ohne Zwischenschaltung von Gelenken sowohl mit dem Rotor als auch mit dem Antrieb oder einer Antriebswelle verbunden. Der Querschnitt der Zwischenwelle ist mehrmals reduziert, wobei die Zwischenwelle mindestens zwei versetzt zueinander angeordnete, senkrecht zur Längsachse der Zwischenwelle verlaufende Stege aufweist. Zwischen den Stegen ist eine Zwischenwand angeordnet.

Die deutsche Patentanmeldung DE 10 2004 043 183 A1 offenbart ein Drehgelenk, beispielsweise zum Antrieb eines schneckenförmigen Rotors einer Exzenterschneckenpumpe. Das Gelenk weist ein gekrümmtes schlauchförmiges Verbindungselement auf. Dieses Verbindungselement besteht aus einem Elastomer und nimmt eine, die Antriebskraft übertragende, ebenfalls schlauchförmige, Einlage auf.

Der Erfindung liegt die Aufgabe zugrunde, ein Gelenk zu schaffen, mit welchem Drehmomente und Axialkräfte einer Antriebswelle auf eine Maschine und/oder eine Exzenterschneckenpumpe ökonomisch, betriebssicher und unkompliziert übertragbar sind.

Die obige Aufgabe wird durch ein Gelenk gelöst, das die Merkmale des Anspruchs 1 umfasst. Weitere vorteilhafte Merkmale sind den Unteransprüchen zu entnehmen.

Eine weitere Aufgabe der Erfindung ist es, ein Verfahren bereit zu stellen, mit dem Drehmomente und Axialkräfte einer Antriebswelle auf eine Maschine und/oder eine Exzenterschneckenpumpe ökonomisch, betriebssicher und unkompliziert übertragen werden können.

Diese Aufgabe wird durch ein Verfahren gelöst, welches die Merkmale des Anspruches 11 umfasst.

Die Erfindung offenbart ein Gelenk zur Übertragung von Drehmomenten und Axialkräften in Verbindung mit einer exzentrischen Rotationsbewegung. In einer bevorzugten Ausführungsform wird das erfindungsgemäße Gelenk in einer Exzenterschneckenpumpe zur Verbindung des Antriebes mit dem Pumpenrotor eingesetzt. Das Gelenk verbindet eine Kuppelstange und ein Werkzeug und/oder einen Antrieb miteinander. Bei der Verwendung des Gelenks in einer Exzenterschneckenpumpe ist das Werkzeug der Rotor der Exzenterschneckenpumpe. Weiterhin ist das Gelenk mit mindestens einer Ummantelung versehen. Die Kräfteübertragung erfolgt im Wesentlichen ohne Verwendung von Elastomeren und die Axialkräfte, die auf das Gelenk wirken, sind von einem ersten Gelenkteil und die Drehmomente von einem zweiten Gelenkteil übertrag- und/oder aufnehmbar, wobei im ersten Gelenkteil nutförmige Einschnürungen eingebracht sind und das zweite Gelenk die Ummantelung bildet.

In der bevorzugten Ausführungsform ist das erste Gelenkteil ein Biegestab, ein Bolzen oder ein zusätzliches Gelenk, wobei das erste Gelenkteil im Zentrum des zweiten Gelenkteils angeordnet ist. Das erste Gelenkteil ist aus einem biegesteifen Material hergestellt und kann verschiedene geometrische Gestaltungsformen aufweisen. Weiterhin ist das Material, aus dem das erste Gelenkteil hergestellt ist, elastisch bzw. frei drehbar. Somit ist es idealerweise nicht möglich, mit dem ersten Gelenkteil Drehmoment zu übertragen. Weiterhin kann das erste Gelenkteil aus einem ersten Teil und einem zweiten Teil aufgebaut sein. Der erste Teil und der zweite Teil sind über ein weiteres Gelenk miteinander verbunden. In einer bevorzugten Ausführungsform ist das zusätzliche Gelenk ein Kugelgelenk.

Das zweite Gelenkteil ist eine verwindungssteife Ummantelung für das Gelenk, die vorzugsweise als Balg oder als Membrane ausgestaltet ist. Das zweite Gelenkteil ist aus einem Metall, einem Kunststoff oder einem Verbundwerkstoff hergestellt. Das Material, aus dem die Ummantelung hergestellt wird, ist so zu wählen, dass es trotz seiner Verwindungssteifheit biegeelastisch ist. Bei der bevorzugten Ausführungsform ist es mit der Ummantelung nicht möglich Axialkräfte zu übertragen. In einer weiteren Ausführungsform ist das zweite Gelenkteil mehrteilig ausgestattet. Bei der mehrlagigen Ausgestaltung können Gelenkteile aus gleichen oder unterschiedlichen Werkstoffen Verwendung finden.

Das Werkzeug und/oder der Antrieb sind durch ein hydraulisches Spannelement mit dem Gelenk verbunden. Für den Fachmann ist klar, dass anstelle der hydraulischen Spannelemente die verschiedensten Elemente verwendet werden können, die geeignet sind, das Gelenk zum Beispiel mit einem Werkzeug zu verbinden. Das hydraulische Spannelement stellt eine lösbare, kraftschlüssige Verbindung dar.

Weiterhin ist ein Verfahren zur Verwendung eines erfindungsgemäßen Gelenkes offenbart, wobei das erste Gelenkteil in einem zweiten Gelenkteil geführt wird. Mit dem ersten Gelenkteil werden Axialkräfte aufgenommen und/oder übertragen, wobei im ersten Gelenkteil nutförmige Einschnürungen in bestimmten Abständen zueinander eingebracht sind. Dadurch, dass der zweite Gelenkteil aus einem verwindungssteifen Material hergestellt ist, ist es möglich, mit diesem die Übertragung von Drehmomenten zu realisieren. Durch die Ummantelung der beweglichen Teile ist es möglich, das erfindungsgemäße Gelenk mit oder ohne Schmiermittel zu verwenden. Dies bringt zum Beispiel erhebliche Vorteile beim Einsatz einer Exzenterschneckenpumpe im Bereich der Lebensmittelförderung, da beim Einsatz des erfindungsgemäßen Gelenks kein Produkt mehr mit Schmiermitteln kontaminiert werden kann.

Durch den Einsatz des hydraulischen Spannelements sind das Werkzeug und/oder der Antrieb über eine gewindelose Verbindung mit dem Gelenk verbunden. Der erste Gelenkteil wird aus verschiedenen Materialien hergestellt. Weiterhin ist es möglich, dass der erste Gelenkteil aus einem ersten Teil und einem zweiten Teil zusammengesetzt wird und das der erste Teil und der zweite Teil durch ein weiteres Gelenk verbunden werden.

In dem erfindungsgemäßen Gelenk werden keine Elastomere verwendet. Hierdurch entstehen weniger Probleme mit der Beständigkeit gegenüber aggressiven Medien. Ein weiterer großer Vorteil liegt darin, dass Medien in einem wesentlich größeren Temperaturbereich gehändelt werden. Weiterhin besteht die Möglichkeit, dass die äußeren Zwischenräume des zweiten Gelenkteils gegen das Eindringen von Fremdkörpern geschützt sind. Dieser Schutz kann aus einer Ummantelung bestehen, die um den zweiten Gelenkteil angeordnet wird. Weiterhin ist es möglich, dass die äußeren Zwischenräume des zweiten Gelenkteils mit einem Elastomer ausgeschäumt werden. Durch dieses Elastomer und/oder durch die Ummantelung wird verhindert, dass Kleinteile in die Nähe des Gelenkes und/oder in die äußeren Zwischenräume des zweiten Gelenkteiles gelangen können und dieses beschädigen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt den schematischen Aufbau des erfindungsgemäßen Gelenks.
Fig. 2 zeigt schematisch den Aufbau eines Gelenks mit einem profilierten ersten Gelenkteil.
Fig. 3 zeigt schematisch den Aufbau eines Gelenks mit einem zweiteiligen ersten Gelenkteil und zusätzlichem Gelenk.
Fig. 4 zeigt ein Gelenk, bei dem die äußeren Zwischenräume des zweiten Gelenkteils mit einem Elastomer aufgefüllt sind.

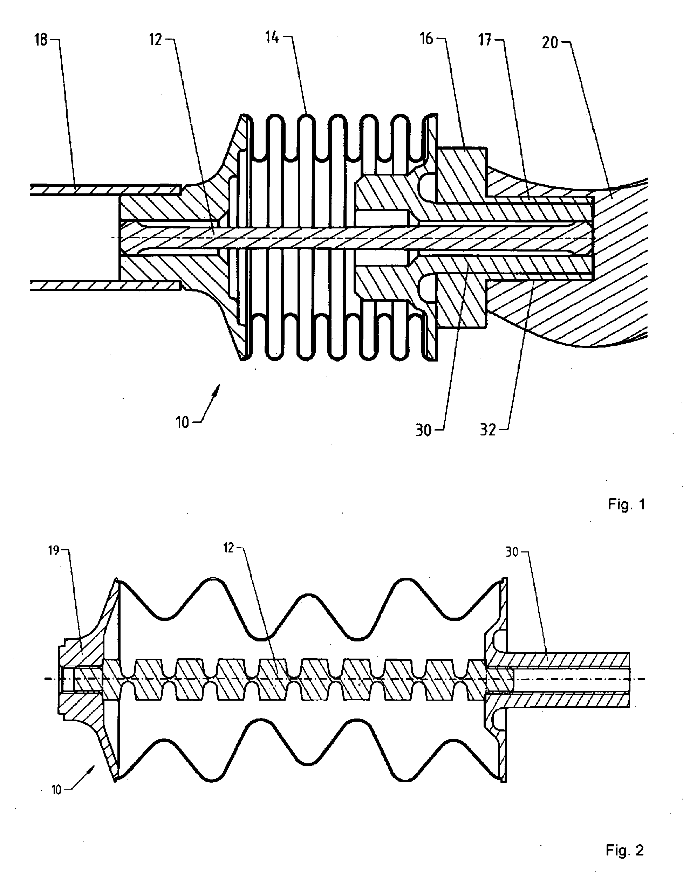

**Fig. 1** zeigt den schematischen Aufbau des erfindungsgemäßen Gelenks 10. Das Gelenk 10 besteht aus einem ersten Gelenkteil 12, das von einem zweiten Gelenkteil 14 umschlossen ist. An der der Kuppelstange 18 gegenüberliegenden Seite ist ein hydraulisches Spannelement 16 angeordnet, mit welchem das Gelenk 10 mit einem Werkzeug 20 oder einem Antrieb (nicht dargestellt) verbunden werden kann. In der Figur 1 ist das Werkzeug 20 der Rotor einer Exzenterschneckenpumpe.

Bei dem hydraulischen Spannelement 16 handelt es sich um eine aus der Technik bekannte Spannbuchse. Das hydraulische Spannelement 16 wird auf eine Gelenkwelle 30 aufgeschoben. Das Werkzeug 20 oder der Antrieb werden auf die Wandung 17 des Spannelementes 16 aufgebracht. Durch das Drehen einer Einstellschraube (nicht dargestellt), expandiert die Wandung 17 und wird an die Werkzeuginnenwand 32 angepresst. Durch die Expansion der Wandung 17 ist das hydraulische Spannelement 16 lösbar und kraftschlüssig mit der Gelenkwelle 30 und der Werkzeuginnenwand 32 verbunden.

**Fig. 2** zeigt schematisch den Aufbau eines Gelenks 10 mit einem profilierten ersten Gelenkteil 12. Durch diese Profilierung ist es möglich die Biegeeigenschaften beim Übergang der Vertikalauslenkung in die Horizontalauslenkung zu verbessern. Dieses verbesserte Verhalten kann auch durch eine nutförmige Einschnürung (nicht dargestellt) im ersten Gelenkteil 12 bewirkt werden. Durch das Einbringen einer zusätzlichen nutförmigen Einschnürung würde die Elastizität nochmals erhöht. Bei diesem ersten Gelenkteil 12 sind nutförmige Einschnürungen in bestimmten Abständen zueinander eingebracht, welche die Festigkeit des ersten Gelenkteils 12 nicht beeinflussen, aber eine Materialersparnis darstellen. Weiterhin werden durch die nutförmigen Einschnürungen in dem ersten Gelenkteil 12 die Rückstellkräfte verringert. Um den modifizierten ersten Gelenkteil 12 aufzunehmen, sind die Verbindung 19 zur Kuppelstange (nicht dargestellt) und die Gelenkwelle 30, im Vergleich zur Figur 1, an die Erfordernisse angepasst worden.

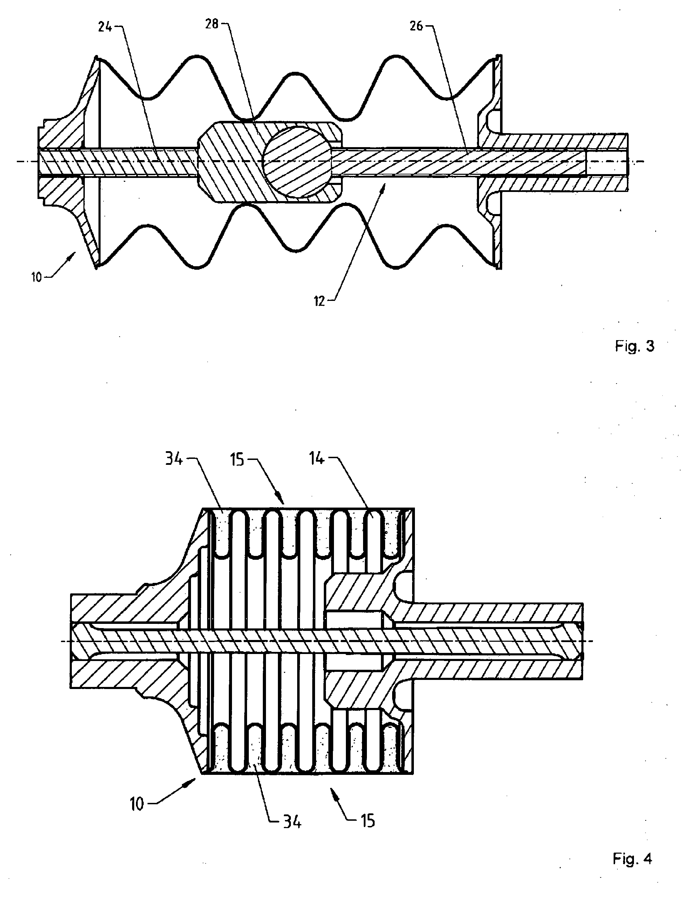

**Fig. 3** zeigt schematisch den Aufbau eines Gelenks 10 mit einem zweiteiligen ersten Gelenkteil 12 und zusätzlichem Gelenk 28. Der erste Gelenkteil 12 besteht, in diesem Ausführungsbeispiel zur Aufnahme zusätzlicher Kräfte, aus einem ersten Teil 24 und einem zweiten Teil 26. Der erste Teil 24 und der zweite Teil 26 sind durch ein zusätzliches Gelenk 28 miteinander verbunden.

**Fig. 4** zeigt ein Gelenk 10, bei dem die äußeren Zwischenräume 15 des zweiten Gelenkteils 14 mit einem Elastomer 34 aufgefüllt sind. Dieses Elastomer 34 ist dazu geeignet, Partikel, die in die äußeren Zwischenräume 15 eindringen könnten, abzuhalten. Das eingesetzte Elastomer 34 ist zwar dem Einfluss verschiedener Fördermedien ausgesetzt, da es aber keine dichtenden oder bewegungstechnischen Aufgaben erfüllt, ist ein Quellen oder eine chemische Veränderung des Elastomers an dieser Stelle des Gelenks 10 unproblematisch und somit vernachlässigbar.

In den Figuren 1 bis 4 ist der erste Gelenkteil 12 als Biegestab und der zweite Gelenkteil als Faltenbalg dargestellt. Für den Fachmann ergibt sich aus diesen Ausgestaltungsformen keine abschließende Begrenzung der Erfindung. Für die Aufnahme von Drehmomenten und/oder Axialkräften sind aus dem Stand der Technik viele Vorrichtungen und Verfahren hierzu bekannt.

Die Erfindung wurde unter Bezugnahme auf eine bevorzugte Ausführungsform beschrieben.

### Bezugszeichen

- 10: Gelenk
- 12: erster Gelenkteil
- 14: zweiter Gelenkteil
- 15: Zwischenräume
- 16: hydraulisches Spannelement
- 17: Wandung des Spannelements
- 18: Kuppelstange
- 19: Verbindung zur Kuppelstange
- 20: Werkzeug
- 24: erster Teil
- 26: zweiter Teil
- 28: weiteres Gelenk
- 30: Gelenkwelle
- 32: Werkzeuginnenwand
- 34: Elastomer

## Patentansprüche

1. Gelenk (10) zur Übertragung von Drehmomenten und Axialkräften in Verbindung mit einer exzentrischen Rotationsbewegung, wobei das Gelenk (10) eine Kuppelstange (18), ein Werkzeug (20) und/oder einen Antrieb verbindet und mit mindestens einer Ummantelung versehen ist, **dadurch gekennzeichnet, dass** die Kräfteübertragung im Wesentlichen ohne Verwendung von Elastomeren erfolgt und die Axialkräfte von einem ersten Gelenkteil (12) und die Drehmomente von einem zweiten Gelenkteil (14) übertragbar sind, wobei im ersten Gelenkteil (12) nutförmige Einschnürungen eingebracht sind und das zweite Gelenkteil (14) die Ummantelung bildet.

2. Gelenk (10) nach Anspruch 1, **dadurch gekennzeichnet, dass** das erste Gelenkteil (12) ein Biegestab, ein Bolzen oder ein zusätzliches Gelenk ist und dass das erste Gelenkteil (12) im Zentrum des zweiten Gelenkteils (14) angeordnet ist.

3. Gelenk (10) nach Anspruch 2, **dadurch gekennzeichnet, dass** das erste Gelenkteil (12) aus einem biegesteifen Material hergestellt ist.

4. Gelenk (10) nach einem der Ansprüche 2 oder 3, **dadurch gekennzeichnet, dass** das erste Gelenkteil (12) verschiedene geometrische Gestaltungsformen aufweist.

5. Gelenk (10) nach einem der Ansprüche 2 bis 4, **dadurch gekennzeichnet, dass** das erste Gelenkteil (12) aus einem ersten Teil (24) und einem zweiten Teil (26) aufgebaut ist.

6. Gelenk (10) nach Anspruch 5, **dadurch gekennzeichnet, dass** der erste Teil (24) und der zweite Teil (26) des ersten Gelenkteils (12) über ein weiteres Gelenk (28) verbunden sind.

7. Gelenk (10) nach Anspruch 1, **dadurch gekennzeichnet, dass** das zweite Gelenkteil (14) eine verwindungssteife Ummantelung für das Gelenk (10), vorzugsweise ein Balg oder eine Membrane ist, wobei das zweite Gelenkteil (14) auch mehrlagig herstellbar ist.

8. Gelenk (10) nach Anspruch 7, **dadurch gekennzeichnet, dass** das zweite Gelenkteil (14) aus einem Metall, einem Kunststoff oder einem Verbundwerkstoff hergestellt ist.

9. Gelenk nach einem der Ansprüche 7 oder 8, **dadurch gekennzeichnet, dass** die äußeren Zwischenräume (15) des zweiten Gelenkteils (14) gegen das Eindringen von Fremdkörpern geschützt sind.

10. Gelenk nach Anspruch 9, **dadurch gekennzeichnet, dass** die äußeren Zwischenräume (15) des zweiten Gelenkteils (14) mit einem Elastomer (34) ausgefüllt sind.

11. Gelenk (10) nach einem der Ansprüche 1 bis 10, **dadurch gekennzeichnet, dass** das Werkzeug (20) und/oder der Antrieb durch ein hydraulisches Spannelement (16) mit dem Gelenk (10) verbunden sind.

12. Gelenk nach Anspruch 11, **dadurch gekennzeichnet, dass** das hydraulische Spannelement (16) eine lösbare, kraft- und formschlüssige Verbindung darstellt.

13. Verfahren, bei dem ein Gelenke (10) gemäß einem der Ansprüche 1 bis 12 verwendet wird, **dadurch gekennzeichnet, dass**
- das erste Gelenkteil (12) in einem zweiten Gelenkteil (14) geführt wird;
- mit dem ersten Gelenkteil (12) Axialkräfte aufgenommen und/oder übertragen werden;
- im ersten Gelenkteil (12) nutförmige Einschnürungen in bestimmten Abständen zueinander eingebracht sind;
- der zweite Gelenkteil (14) aus einem verwindungssteifen Material hergestellt wird und dass mit dem zweiten Gelenkteil (14) Drehmomente übertragen werden und
- in dem Gelenk (10) keine Schmiermittel eingesetzt werden und in dem keine Elastomere zur Kraftübertragung Verwendung finden.

14. Verfahren nach Anspruch 13, **dadurch gekennzeichnet, dass** das Werkzeug (20) und/oder der Antrieb durch ein hydraulisches Spannelement (16) mit dem Gelenk (10) gewindelos verbunden werden.

15. Verfahren nach einem der Ansprüche 13 oder 14, **dadurch gekennzeichnet, dass** das erste Gelenkteil (12) aus verschiedenen Materialien hergestellt wird.

16. Verfahren nach einem der Ansprüche 13 bis 15, **dadurch gekennzeichnet, dass** der erste Gelenkteil (12) aus einem ersten Teil (24) und einem zweiten Teil (26) zusammengesetzt wird, und dass der erste Teil (24) und der zweite Teil (26) durch ein weiteres Gelenk (28) verbunden werden.

## Claims

1. A hinge (10) for transferring torques and axial forces in conjunction with an eccentric rotational movement, wherein the hinge (10) joins together a coupling rod (18), a tool (20) and/or a drive, and is provided with at least one jacket, **characterized in that** the force is transferred essentially without the use of elastomers, and the axial forces can be transferred from a first hinge part (12) and the torque from a second hinge part (14), wherein grooved constrictions are incorporated into the first hinge part (12), and the second hinge part (14) comprises the jacket.

2. The hinge (10) according to claim 1, **characterized in that** the first hinge part (12) is a bending rod, a bolt or an additional hinge, and that the first hinge part (12) is arranged in the center of the second hinge part (14).

3. The hinge (10) according to claim 2, **characterized in that** the first hinge part (12) is made out of a rigid material.

4. The hinge (10) according to one of claims 2 or 3, **characterized in that** the first hinge part (12) exhibits various geometric forms.

5. The hinge (10) according to one of claims 2 to 4, **characterized in that** the first hinge part (12) is comprised of a first part (24) and a second part (26).

6. The hinge (10) according to claim 5, **characterized in that** the first part (24) and second part (26) of the first hinge part (12) are connected by means of an additional hinge (28).

7. The hinge (10) according to claim 1, **characterized in that** the second hinge part (14) is a torsion-resistant jacket for the hinge (10), preferably a bellows or membrane, wherein the second hinge part (14) can also be fabricated with multiple layers.

8. The hinge (10) according to claim 7, **characterized in that** the second hinge part (14) is made out of a metal, a plastic or a composite material.

9. The hinge according to one of claims 7 or 8, **characterized in that** the outer gaps (15) of the second hinge part (14) are protected against the penetration of foreign bodies.

10. The hinge according to claim 9, **characterized in that** the outer gaps (15) of the second hinge part (14) are filled with an elastomer (34).

11. The hinge (10) according to one of claims 1 to 10, **characterized in that** the tool (20) and/or drive are connected with the hinge (10) by means of a hydraulic tension element (16).

12. The hinge according to claim 11, **characterized in that** the hydraulic tension element (16) constitutes a detachable, non-positive and positive bond.

13. A method, in which a hinge (10) according to claims 1 to 12 is used, **characterized in that**
- the first hinge part (12) is guided in a second hinge part (14);
- axial forces are absorbed and/or transferred with the first hinge part (12);
- grooved neckings are incorporated into the first hinge part (12) at specific distances from each other;
- the second hinge part (14) is made out of a torque-resistant material, and torques are transferred with the second hinge part (14), and
- no lubricants are used in the hinge (10), and no elastomers are used therein for the transfer of forces.

14. The method according to claim 13, **characterized in that** the tool (20) and/or drive are connected with the hinge (10) without threads by means of a hydraulic tension element (16).

15. The method according to one of claims 13 or 14, **characterized in that** the first hinge part (12) is made out of various materials.

16. The method according to one of claims 13 to 15, **characterized in that** the first hinge part (12) is comprised of a first part (24) and second part (26), and that the first part (24) and second part (26) are connected by an additional hinge (28).

## Revendications

1. Articulation (10) pour transmettre des couples de rotation et des forces axiales en liaison avec un mouvement de rotation excentré, sachant que l'articulation (10) relie une bielle d'accouplement (18), un outil (20) et/ou un entraînement et est dotée d'au moins une gaine, **caractérisée en ce que** la transmission de force a lieu essentiellement sans utilisation d'élastomères, et les forces axiales peuvent être transmises par une première pièce d'articulation (12) et les couples de rotation peuvent être transmis par une seconde pièce d'articulation (14), sachant que des gorges en forme de rainure sont intégrées dans la première pièce d'articulation (12) et que la seconde pièce d'articulation (14) forme la gaine.

2. Articulation (10) selon la revendication 1, **caractérisée en ce que** la première pièce d'articulation (12) est une barre de flexion, un goujon ou une articulation supplémentaire et que la première pièce d'articulation (12) est disposée au centre de la seconde pièce d'articulation (14).

3. Articulation (10) selon la revendication 2, **caractérisée en ce que** la première pièce d'articulation (12) est fabriquée en matériau rigide à la flexion.

4. Articulation (10) selon l'une des revendications 2 ou 3, **caractérisée en ce que** la première pièce d'articulation (12) présente différentes formes géométriques.

5. Articulation (10) selon l'une des revendications 2 à 4, **caractérisée en ce que** la première pièce d'articulation (12) est composée d'une première partie (24) et d'une seconde partie (26).

6. Articulation (10) selon la revendication 5, **caractérisée en ce que** la première partie (24) et la seconde partie (26) de la première pièce d'articulation (12) sont reliées par une articulation supplémentaire (28).

7. Articulation (10) selon la revendication 1, **caractérisée en ce que** la seconde pièce d'articulation (14) est une gaine rigide à la torsion pour l'articulation (10), de préférence un soufflet ou une membrane, sachant que la seconde pièce d'articulation (14) peut être également fabriquée en plusieurs couches.

8. Articulation (10) selon la revendication 7, **caractérisée en ce que** la seconde pièce d'articulation (14) est fabriquée dans un métal, un plastique ou un matériau composite.

9. Articulation selon l'une des revendications 7 ou 8, **caractérisée en ce que** les interstices extérieurs (15) de la seconde partie d'articulation (14) sont protégés contre la pénétration de corps étrangers.

10. Articulation selon la revendication 9, **caractérisée en ce que** les interstices extérieurs (15) de la seconde partie d'articulation (14) sont remplis d'un élastomère (34).

11. Articulation (10) selon l'une des revendications 1 à 10, **caractérisée en ce que** l'outil (20) et/ou l'entraînement est/sont relié(s) à l'articulation (10) par un élément de serrage hydraulique (16).

12. Articulation selon la revendication 11, **caractérisée en ce que** l'élément de serrage hydraulique (16) représente une liaison séparable, par adhérence des forces et complémentarité de formes.

13. Procédé, dans lequel une articulation (10) selon l'une des revendications 1 à 12 est employée, **caractérisé en ce que**
- la première partie d'articulation (12) est dirigée dans une seconde partie d'articulation (14) ;
- des forces axiales sont reçues et/ou transmises avec la première partie d'articulation (12) ;
- des gorges en forme de rainure sont intégrées à différents écarts entre elles dans la première partie d'articulation (12) ;
- la seconde partie d'articulation (14) est fabriquée dans un matériau rigide à la torsion et que des couples de rotation sont transmis avec la seconde partie d'articulation (14) et
- aucun lubrifiant n'est employé dans l'articulation (10) et aucun élastomère pour transmettre des forces n'y est employé.

14. Procédé selon la revendication 13, **caractérisé en ce que** l'outil (20) et/ou l'entraînement sont reliés sans filetage à l'articulation (10) par le biais d'un élément de serrage hydraulique (16).

15. Procédé selon l'une des revendications 13 ou 14, **caractérisé en ce que** la première partie d'articulation (12) est fabriquée dans différents matériaux.

16. Procédé selon l'une des revendications 13 à 15, **caractérisé en ce que** la première partie d'articulation (12) est composée d'une première partie (24) et d'une seconde partie (26), et que la première partie (24) et la seconde partie (26) sont reliées par une articulation supplémentaire (28).
